# FASCICULE DE BREVET EUROPEEN

(11) **EP 1 660 765 B1**
(45) Date de publication et mention de la délivrance du brevet: **28.10.2009**
(21) Numéro de dépôt: 04786335.2
(22) Date de dépôt: 20.08.2004
(51) Int. Cl.: F02D 41/22, B60K 26/00

(54) **PROCEDE DE DETECTION DE LA DEFAILLANCE D'UN SIGNAL REPRESENTATIF DE L'ENFONCEMENT D'UNE PEDALE D'ACCELERATION DE VEHICULE AUTOMOBILE**
SIGNALFEHLERERFASSUNGSVERFAHREN, WOBEI DAS SIGNAL DAS NIEDERDRÜCKEN EINES KRAFTFAHRZEUGGASPEDALS REPRÄSENTIERT
SIGNAL FAILURE DETECTION METHOD, WHEREBY THE SIGNAL REPRESENTS MOTOR VEHICLE ACCELERATOR PEDAL DEPRESSION

(30) Priorité: 29.08.2003 FR 0310306
(43) Date de publication de la demande: 31.05.2006
(73) Titulaire: RENAULT S.A.S., 92100 Boulogne Billancourt (FR)
(72) Inventeur: BIEMONT, Anne, F-91630 Avrainville (FR); FRAWEEL, Olivier, F-91160 Saulx Les Chartreux (FR); MARTINEZ, Alexandre, F-91370 Verrières Le Buisson (FR)
(74) Mandataire: Davies, Owen Robert Treharne
(86) Numéro de dépôt international: PCT/FR2004/002170
(87) Numéro de publication internationale: WO 2005/024212

(56) Documents cités:
- WO-A-91/04400
- DE-A- 4 118 375
- DE-A- 4 126 025
- PATENT ABSTRACTS OF JAPAN vol. 010, no. 153 (M-484), 3 juin 1986 (1986-06-03) -& JP 61 008442 A (NISSAN JIDOSHA KK), 16 janvier 1986 (1986-01-16)

## Description

L'invention concerne un procédé de détection de la défaillance d'un capteur d'enfoncement d'une pédale d'accélération de véhicule automobile, ou un blocage mécanique de ladite pédale d'accélération.

L'invention concerne plus particulièrement un procédé de détection de la défaillance d'un système d'émission d'un signal représentatif de l'enfoncement d'une pédale d'accélération de véhicule automobile, du type qui comporte une étape de test de la défaillance, comme connu, par exemple, du document JP 61008442 A.

Certains véhicules automobiles comportent au moins une unité de calcul qui est destinée à piloter le moteur en fonction d'un signal représentatif du degré d'enfoncement de la pédale d'accélération. Pour simplifier la lecture de la description ce signal sera dorénavant nommé « signal d'accélération ».

A cet effet, la pédale d'accélération coopère avec un capteur pour détecter le degré d'enfoncement de la pédale qui produit un signal d'accélération.

L'unité de calcul du moteur traite ensuite ce signal afin de piloter le couple ou la puissance du moteur en fonction du degré d'enfoncement de la pédale d'accélération.

Il advient parfois une défaillance qui corrompt le signal d'accélération reçu par l'unité de calcul. Cette défaillance peut par exemple provenir d'un dysfonctionnement du capteur de la pédale d'accélération.

Le signal d'accélération n'est alors plus représentatif du degré d'enfoncement réel de la pédale d'accélération. Dans la suite de la description, un tel signal sera qualifié de « défaillant ». La maîtrise du couple du moteur est donc susceptible d'échapper au conducteur.

Par exemple, le signal d'accélération indique à l'unité de calcul que la pédale d'accélération est toujours enfoncée d'un certain degré alors que le conducteur a totalement relâché son effort sur la pédale. Le moteur continue donc de tourner à un régime élevé alors que le conducteur s'attend à une diminution du régime et/ou à une décélération du véhicule.

Dans l'état de la technique, on a déjà proposé un procédé pour détecter une telle défaillance. Si la défaillance est détectée, il est possible d'adopter un mode de fonctionnement dit « dégradé » de l'unité de calcul. Le mode dégradé permet au conducteur du véhicule de stopper l'accélération de son véhicule en réduisant le couple du moteur: L'enfoncement de la pédale de freinage est alors pris en compte tandis que l'enfoncement de la pédale d'accélération qui est jugée défaillante, est ignoré.

Dans l'état de la technique, on a aussi proposé un procédé pour détecter la défaillance du signal d'accélération. Ce procédé comporte une première étape durant laquelle on compare le signal d'accélération avec un second signal représentatif de l'enfoncement de la pédale de freinage, ou « signal de freinage ». Si le signal d'accélération et le signal de freinage indiquent que les pédales d'accélération et de freinage sont enfoncées simultanément pendant une durée supérieure à une durée prédéterminée, alors le signal d'accélération est considéré comme défaillant.

Cependant, dans certaines circonstances, une défaillance du système peut être détectée alors qu'il n'y a pas de défaillance réelle. Le procédé détecte alors une « fausse » défaillance du signal d'accélération, et le mode de fonctionnement dégradé est déclenché de manière inopportune.

En effet, selon le type de véhicule ou selon le type de pilotage réalisé par le conducteur du véhicule, la pédale de frein est susceptible d'être enfoncée en même temps que la pédale d'accélération. Cela peut se produire lorsque le véhicule est équipé d'une boîte de vitesse automatique, ou lorsque le conducteur conduit de façon « sportive ».

De plus, si le signal de freinage est lui-même défaillant, le procédé détectera à tort une défaillance au niveau du signal d'accélération.

Un autre inconvénient de ce procédé est que, aussitôt que le conducteur relâche la pédale de freinage, le signal d'accélération n'est plus considéré comme défaillant. Cette interprétation du signal d'accélération risque de provoquer des accélérations involontaires dés que le conducteur relâche la pédale de freinage.

Afin de résoudre ces problèmes, l'invention propose un procédé du type décrit précédemment selon la revendication 1.

Selon d'autres caractéristiques de l'invention :
- au cours de l'étape préalable, on teste la condition principale de stabilité que la pédale d'accélération est enfoncée au-delà d'un seuil minimum d'enfoncement ;
- au cours de l'étape préalable, on teste la condition principale de stabilité que le couple du moteur est supérieur à un couple de seuil ;
- au cours de l'étape préalable, on teste des conditions secondaires de situation de roulage pour lesquelles le procédé est susceptible de détecter une fausse défaillance, et notamment que la pédale de freinage n'est pas signalée comme enfoncée ;
- lorsque le résultat des tests réalisés au cours de l'étape préalable de stabilité reste positif pendant une durée prédéterminée, on déclenche l'étape de test de la défaillance ;

L'invention concerne plus particulièrement un procédé du type dans lequel l'étape de test de la défaillance comporte successivement une phase de test de la simultanéité de l'enfoncement de la pédale d'accélération et de la pédale de freinage ; puis une phase de diagnostic de la défaillance au cours de laquelle on émet un signal représentatif de la défaillance du système d'émission, et qui est déclenchée lorsque le test de simultanéité de la phase précédente reste positif pendant une durée déterminée, **caractérisé en ce que** lors de la phase de test de la simultanéité, on vérifie que les conditions principales de stabilité sont positives, et que la pédale de freinage est enfoncée.

Selon encore d'autres caractéristiques :
- la phase de diagnostic comporte une première opération de test durant laquelle on vérifie que les conditions principales de stabilité sont positives, cette phase permet par exemple de s'assurer que la pédale d'accélérateur est jugée bloquée mécaniquement ;
- lorsque l'une des conditions de stabilité devient fausse, le système d'émission n'est pas considéré comme défaillant, et le procédé est réinitialisé, cela permet notamment de ne plus considérer la pédale d'accélération défaillante lorsque l'enfoncement de cette dernière varie dans le temps ;
- au cours de la phase de diagnostic, lorsque la première opération de test est positive pendant une durée prédéterminée, on déclenche une seconde opération au cours de laquelle on émet un signal représentatif d'une défaillance permanente du système d'émission.

D'autres caractéristiques et avantages de l'invention apparaîtront au cours de la lecture de la description détaillée qui va suivre pour la compréhension de laquelle on se reportera aux dessins en annexe, parmi lesquels :
- la figure 1 représente de manière schématique un véhicule automobile équipé d'un moteur à combustion, d'une unité électronique de calcul, et de pédales de freinage et d'accélération munies chacune d'un capteur du degré d'enfoncement ;
- la figure 2 est un organigramme d'un procédé réalisé selon les enseignements de l'invention pour détecter la défaillance du capteur de la pédale d'accélération de la figure 1 ;
- la figure 3 est un organigramme d'un mode de réalisation particulier du procédé de la figure 2.

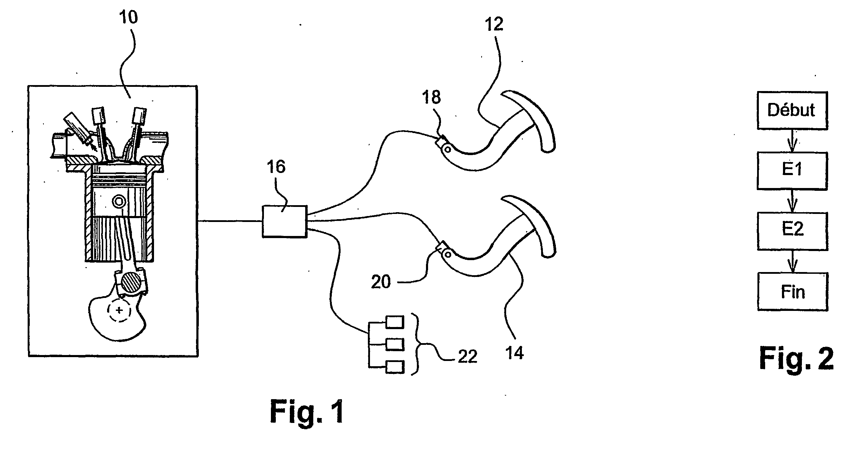

On a représenté schématiquement à la figure 1 un véhicule automobile qui comporte un moteur 10, une pédale d'accélération 12, une pédale de freinage 14, et une unité électronique de calcul 16, pour commander le couple C du moteur 10.

Le moteur 10 est ici un moteur à combustion interne, mais l'invention est applicable à d'autres types de moteur tel qu'un moteur électrique, ou encore à un groupe motopropulseur hybride.

Le couple C de fonctionnement du moteur 10 est piloté en fonction du degré d'enfoncement de la pédale d'accélération 12, par l'intermédiaire de l'unité de calcul 16. A cet effet, le véhicule comporte un système 18 d'émission d'un signal S1 représentatif du degré d'enfoncement de la pédale d'accélération 12 à destination de l'unité de calcul 16. L'unité de calcul 16 pilote le couple C du moteur 10 en fonction du signal d'accélération S1.

Le système d'émission est ici un capteur angulaire 18 qui est monté sur l'axe de montage (non représenté) de la pédale 12 d'accélération. Le capteur 18 détecte le degré d'enfoncement de la pédale d'accélération 12.

La pédale de freinage 14 comporte un capteur 20 d'enfoncement de la pédale 14 qui émet un signal S2 représentatif du degré d'enfoncement de la pédale de freinage 14, ou « signal de freinage », à destination de l'unité de calcul 16.

Selon une variante non représentée, le capteur 20 est un capteur de type binaire ou « tout ou rien » qui émet un signal représentatif de l'enfoncement de la pédale de freinage 14 ne contenant pas l'information relative au degré d'enfoncement.

Le véhicule comporte aussi divers capteurs 22 qui sont susceptibles de communiquer, à destination de l'unité de calcul 16, des signaux représentatifs respectivement du couple C du moteur 10, et de la vitesse V du véhicule

Selon les enseignements de l'invention, l'unité de calcul 16 est susceptible de mettre en oeuvre un procédé de détection d'une défaillance du signal d'accélération S1.

Comme illustré à la figure 2, le procédé comporte successivement les deux étapes suivantes :
- une étape préalable E1 de test de stabilité de l'enfoncement de la pédale d'accélération 12 ;
- une étape E2 de test de la défaillance du capteur 18.

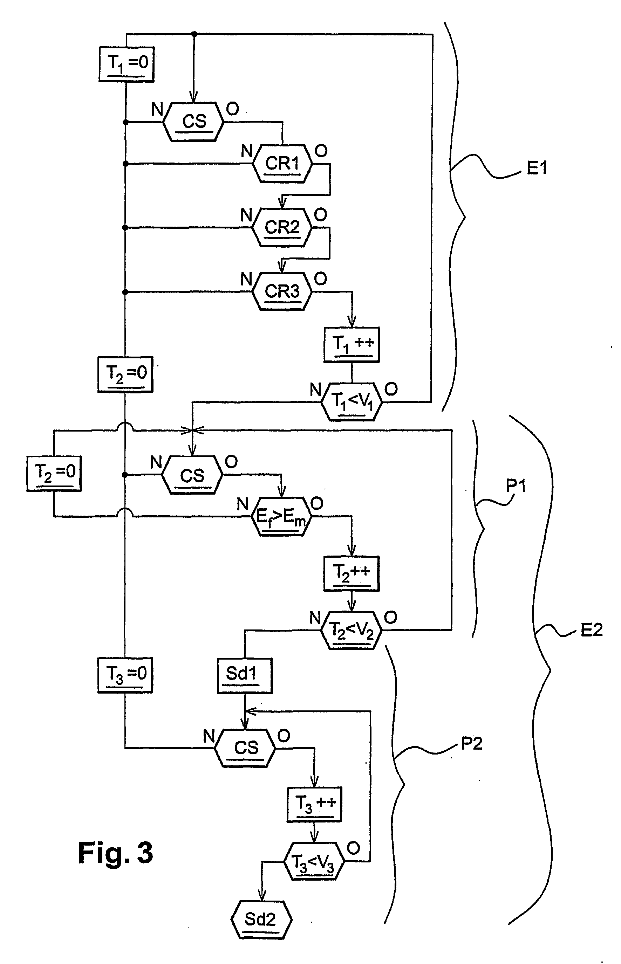

Dans le mode de réalisation de l'invention représenté à la figure 3, l'étape E2 comporte plus particulièrement :
- une première phase P1 de test de la simultanéité de l'enfoncement de la pédale d'accélération 12 et de la pédale de freinage 14 ;
- une seconde phase P2 de diagnostic de la défaillance du capteur angulaire d'accélération 18.

Lors de l'étape préalable de stabilité E1, l'unité de calcul 16 teste des conditions principales de stabilité CS de l'enfoncement de la pédale d'accélération 12, et des conditions secondaires de roulage CR qui sont représentatives de la situation de roulage instantanée du véhicule.

Le test des conditions principales de stabilité CS est destiné à vérifier que le signal d'accélération S1 indique un degré d'enfoncement stable de la pédale d'accélération 12. Les conditions principales de stabilité CS sont données à titre non limitatif.

Une première condition de stabilité CS1 est que la pédale d'accélération 12 est enfoncée au-delà d'un seuil d'enfoncement minimal θₛₑᵤᵢₗ. II est en effet nécessaire que la pédale d'accélération 12 soit enfoncée pour qu'on procède à une analyse de la stabilité d'enfoncement.

Une deuxième condition de stabilité CS2 est que la valeur absolue de la variation dans le temps du degré d'enfoncement de la pédale d'accélération 12 soit inférieure à un seuil de stabilité Δθₛₑᵤᵢₗ/Δt. Si le test est positif, le degré d'enfoncement de la pédale est considéré comme globalement stable.

Enfin, une troisième condition de stabilité CS3 est que le couple C de fonctionnement du moteur 10 doit être supérieur à une valeur, dite couple plancher Cp, afin de corroborer le test d'enfoncement de la pédale d'accélération 12.

Le test des conditions secondaires de roulage CR a pour but de déterminer si le véhicule roule dans des conditions appropriées à la mise en oeuvre du procédé, c'est-à-dire des conditions dans lesquelles le procédé n'est pas susceptible de détecter une « fausse » défaillance du signal d'accélération. Voici une liste indicative et non exhaustive des conditions CR susceptibles d'être testées.

La première condition de roulage CR1 est que le véhicule roule à une vitesse V supérieure à une vitesse plancher Vp.

La deuxième condition de roulage CR2 est que la pédale de freinage 14 ne doit pas être enfoncée. Ce test a pour but d'empêcher le procédé de détection de conclure à une défaillance du signal d'accélération S1 lorsque le signal de freinage S2 est lui-même corrompu, c'est-à-dire lorsque le signal de freinage S2 est « bloqué » sur une valeur d'enfoncement de la pédale de freinage 14 indépendamment de l'enfoncement réel de la pédale de freinage 14.

La troisième condition de roulage CR3 est qu'aucun autre procédé utilisant et/ou générant des signaux de freinage et/ou d'accélération ne soit en cours de mise en oeuvre. Un autre procédé est par exemple un procédé pour stabiliser le véhicule lorsqu'il roule sur une route partiellement glissante, aussi appelé « ASR ».

Selon une variante non représentée, une autre condition de roulage CR à vérifier est que le signal ne soit pas électriquement défaillant, par exemple que le signal n'ait pas une intensité supérieure à une limite supérieure.

Les conditions secondaires de roulage CR qui sont données ici peuvent être combinées librement par l'homme du métier en fonction du véhicule sur lequel le procédé est destiné à fonctionner, et notamment en fonction des conditions susceptibles de causer la détection d'une « fausse » défaillance.

Ces différents tests des conditions principales CS et secondaires CR sont ici réalisés en cascade en fonction de signaux représentatifs des données instantanées qui sont nécessaires aux tests, et qui sont reçus par l'unité de calcul 16. L'ordre dans lequel ces différentes conditions CR et CS sont testées est donné à titre d'exemple non limitatif.

Si le résultat de chacun des tests est positif, un compteur T1, initialisé à zéro, est incrémenté et les tests sont réitérés.

Si le résultat de l'un du test est négatif, le compteur T1 est réinitialisé à zéro, et l'étape préalable de stabilité E1 est réitérée.

Lorsque le compteur T1 atteint une valeur prédéterminée V1, l'étape préalable E1 prend fin, et la première phase P1 de l'étape de test de la défaillance E2 est déclenchée.

La première phase de simultanéité P1 est destinée à détecter un enfoncement simultané de la pédale d'accélération 12 et de la pédale de freinage 14. Au cours de cette phase P1, on vérifie aussi que les conditions CS de stabilité de la pédale d'accélération 12 sont toujours positives.

On teste que le degré d'enfoncement EF de la pédale de freinage 14 est supérieur à un seuil d'enfoncement minimum Em. Ce test est réalisé en fonction du signal S2 représentatif de l'enfoncement de la pédale de freinage 14.

Selon une variante non représentée, si le capteur 20 associé à la pédale de freinage 14 est du type binaire, on teste simplement l'enfoncement de la pédale de freinage en fonction du signal binaire S2.

Selon une autre variante non représentée, la pédale de freinage 14 comporte deux capteurs similaires 20 qui émettent deux signaux parallèles S2 et S2. On peut ainsi effectuer deux tester simultanément les deux signaux de freinage afin de rendre plus robuste le test de freinage.

Puis on teste de nouveau les conditions principales de stabilités CS comme décrit précédemment.

Si les deux tests sont positifs, un compteur T2, initialisé à zéro, est incrémenté, puis la première phase P1 est réitérée.

Si le test des conditions principales de stabilité réalisé au cours de la phase P1 est négatif, tous les compteurs T1 et T2 sont réinitialisés, et le procédé reprend au début de l'étape préalable E1.

Si seul le test d'enfoncement de la pédale de freinage 14 est négatif, on réinitialise uniquement le compteur T2, et la première phase est réinitialisée.

Lorsque le compteur T2 atteint une valeur prédéterminée V2, la première phase P1 prend fin, et on déclenche alors la seconde phase de diagnostic P2.

Lors de la deuxième phase de diagnostic P2, on considère que le signal d'accélération S1 est défaillant. Selon les enseignements de l'invention, la réunion des conditions CS, CR et Em testées lors de l'étape de stabilité E1 et de la première phase de simultanéité P1 est en effet un indice de la défaillance du signal d'accélération S1. L'unité de calcul 16 émet donc un signal Sd1 destiné à mettre en oeuvre le mode de fonctionnement dégradé du moteur 10. Le signal Sd1 correspond à un résultat positif au test de toutes les conditions CS, CR et Em de manière cumulative.

Cependant, pour des raisons de sécurité, le mode dégradé est déclenché de manière réversible. On teste encore les conditions principales CS de stabilité de la pédale d'accélération 12 afin de vérifier que les conditions CS sont toujours remplies. Ainsi, si l'une des conditions de stabilité CS n'est plus remplie, on considère que le signal d'accélération S1 a été jugé défaillant à tort, et le procédé est entièrement réinitialisé.

Si toutes les conditions de stabilité CS demeurent positives, un compteur T3, initialisé à zéro, est incrémenté. Lorsque ce compteur T3 atteint une valeur prédéterminée V3, on considère que le signal d'accélération S1 est irrémédiablement défaillant, et l'unité de calcul 16 émet un signal Sd2 correspondant à un déclenchement permanent du mode dégradé.

Les différentes conditions CS, CR, et Em, les valeurs prédéterminées V1, V2 et V3 des compteurs T1, T2 et T3 sont calibrées par l'homme du métier.

Selon une variante non représentée de l'invention, l'unité de calcul 16 comporte plusieurs processeurs qui permettent de réaliser plusieurs tests simultanément lors de chaque étape E1 et E2. Un processeur est par exemple dédié au test des conditions principales de stabilité CS.

Selon encore une autre variante non représentée, l'unité de calcul 16 est réalisée en tout ou en partie sous forme de circuits électroniques implémentant tout ou partie des fonctions décrites ci-dessus.

## Revendications

1. Procédé de détection de la défaillance d'un système (18) d'émission d'un signal représentatif du degré d'enfoncement d'une pédale d'accélération (12) de véhicule automobile, du type qui comporte une étape de test de la défaillance (E2),
**caractérisé en ce qu'**il comporte une étape préalable (E1) de test de stabilité de l'enfoncement de la pédale d'accélération (12) afin d'éviter les erreurs de détection de défaillance, au cours de laquelle on teste que la variation par rapport au temps de l'enfoncement de la pédale d'accélération (12) est sensiblement nulle.

2. Procédé selon l'une quelconque des revendications précédentes, **caractérisé en ce qu'**au cours de l'étape préalable (E1), on teste que la pédale d'accélération (12) est enfoncée au-delà d'un seuil minimum d'enfoncement.

3. Procédé selon l'une quelconque des revendications précédentes, **caractérisé en ce qu'**au cours de l'étape préalable (E1), on teste que le couple (C) du moteur (10) est supérieur à un couple de seuil (Np).

4. Procédé selon l'une quelconque des revendications 1 à 3, **caractérisé en ce qu'**au cours de l'étape préalable (E1), on teste des conditions secondaires de situation de roulage (CR) pour lesquelles le procédé est susceptible de détecter une fausse défaillance, et notamment que la pédale de freinage (14) n'est pas signalée comme enfoncée.

5. Procédé selon l'une quelconque des revendications 1 à 4, **caractérisé en ce que**, lorsque le résultat des tests réalisés au cours de l'étape préalable de stabilité (E1) reste positif pendant une durée prédéterminée (V1), on déclenche l'étape de test de la défaillance (E2).

6. Procédé selon la revendication précédente, du type dans lequel l'étape de test de la défaillance (E2) comporte successivement :
- une phase (P1) de test de la simultanéité de l'enfoncement de la pédale d'accélération (12) et de la pédale de freinage (14) ; puis
- une phase (P2) de diagnostic de la défaillance au cours de laquelle on émet un signal (Sd1) représentatif de la défaillance du système d'émission, et qui est déclenchée lorsque le test de simultanéité de la phase précédente (P1) reste positif pendant une durée déterminée (V2),
**caractérisé en ce que**, lors de la phase de test de la simultanéité (P1), on vérifie que l'enfoncement de la pédale d'accélération est stable, et que la pédale de freinage (14) est enfoncée.

7. Procédé selon la revendication précédente, **caractérisé en ce que** la phase de diagnostic (P2) comporte une première opération de test durant laquelle on vérifie que l'enfoncement de la pédale d'accélération est stable.

8. Procédé selon l'une quelconque des revendications précédentes, **caractérisé en ce que**, lorsque l'enfoncement de la pédale est testé comme n'étant plus stable, le système d'émission (18) n'est pas considéré comme défaillant, et le procédé est réinitialisé.

9. Procédé selon la revendication précédente, **caractérisé en ce que,** au cours de la phase de diagnostic (P2), lorsque la première opération de test est positive pendant une durée prédéterminée (V3), on déclenche une seconde opération au cours de laquelle on émet un signal (Sd2) représentatif d'une défaillance permanente du système d'émission.

## Claims

1. Method of detecting the failure of a system (18) that emits a signal representative of the extent to which a motor vehicle accelerator pedal (12) is depressed, of the type which comprises a failure test step (E2),
**characterized in that** it comprises a prior step (E1) that tests for the stability of the depression of the accelerator pedal (12) so as to avoid failure detection errors, during which prior step a test is conducted to determine that the variation in accelerator pedal (12) depression with respect to time is substantially zero.

2. Method according to the preceding claim, **characterized in that,** during the prior step (E1), a test is conducted to ensure that the accelerator pedal (12) has been depressed beyond a minimum depression threshold.

3. Method according to either one of the preceding claims, **characterized in that**, during the prior step (E1), a test is conducted to ensure that the torque (C) of the engine (10) is above a threshold torque (Np).

4. Method according to any one of Claims 1 to 3, **characterized in that,** during the prior step (E1), tests are conducted for secondary driving conditions (CR) in which the method is liable to detect a false failure, and, notably, tests are conducted to ensure that the brake pedal (14) is not showing as depressed.

5. Method according to any one of Claims 1 to 4, **characterized in that** when the result of the tests conducted during the prior stability step (E1) remains positive for a predetermined length of time (V1), the failure test step (E2) is initiated.

6. Method according to the preceding claim, of the type in which the failure test step (E2) comprises, in succession,
- a phase (P1) of testing for simultaneous depression of the accelerator pedal (12) and of the brake pedal (14); then
- a phase (P2) of diagnosing failure during which phase a signal (Sd1) representative of failure of the emission system is emitted, and which is initiated when the simultaneity test of the preceding phase (P1) remains positive for a determined length of time (V2),
**characterized in that**, during the simultaneity test phase (P1), checks are conducted to ensure that the accelerator pedal depression remains stable and that the brake pedal (14) is depressed.

7. Method according to the preceding claim, **characterized in that** the diagnostic phase (P2) comprises a first test operation during which it is checked that the accelerator pedal depression is stable.

8. Method according to any one of the preceding claims, **characterized in that,** when the depression of the pedal is tested as no longer being stable, the emission system (18) is not considered to have failed, and the method is reset.

9. Method according to the preceding claim, **characterized in that,** during the diagnostic phase (P2), when the first test operation is positive for a predetermined length of time (V3), a second operation is initiated during which a signal (Sd2) representative of permanent failure of the emission system is emitted.

## Patentansprüche

1. Verfahren zum Erfassen der Störung eines Systems (18) zum Senden eines Signals, das für den Niederdrückgrad eines Gaspedals (12) eines Kraftfahrzeugs repräsentativ ist, von dem Typ, der einen Testschritt der Störung (E2) aufweist,
**dadurch gekennzeichnet, dass** es einen vorhergehenden Testschritt (E1) der Beständigkeit des Niederdrückens des Gaspedals (12) aufweist, um die Störungserfassungsfehler zu vermeiden, während dem getestet wird, ob die Veränderung bezüglich der Niederdrückzeit des Gaspedals (12) im Wesentlichen gleich Null ist.

2. Verfahren nach dem vorhergehenden Anspruch, **dadurch gekennzeichnet, dass** während des vorhergehenden Schritts (E1) getestet wird, ob das Gaspedal (12) über eine Mindestniederdrückschwelle hinaus niedergedrückt ist.

3. Verfahren nach einem der vorhergehenden Ansprüche, **dadurch gekennzeichnet, dass** während des vorhergehenden Schritts (E1) getestet wird, ob das Drehmoment (C) des Motors (10) höher ist als ein Schwelldrehmoment (Np).

4. Verfahren nach einem der Ansprüche 1 bis 3, **dadurch gekennzeichnet, dass** während des vorhergehenden Schritts (E1) sekundäre Fahrsituationsbedingungen (CR) getestet werden, bei denen das Verfahren einen unechte Störung feststellen kann, und insbesondere, dass das Bremspedal (14) nicht als niedergedrückt angezeigt wird.

5. Verfahren nach einem der Ansprüche 1 bis 4, **dadurch gekennzeichnet, dass**, wenn das Ergebnis der während des vorhergehenden Beständigkeits-Schritts (E1) durchgeführten Tests während einer vorbestimmten Dauer (V1) positiv bleibt, der Testschritt der Störung ausgelöst wird (E2).

6. Verfahren nach dem vorhergehenden Anspruch, von dem Typ, bei dem der Testschritt der Störung (E2) nacheinander aufweist:
- eine Testphase (P1) der Gleichzeitigkeit des Niederdrückens des Gaspedals (12) und des Bremspedals (14); dann
- eine Diagnosephase (P2) der Störung, während der ein Signal (Sd1) gesendet wird, das für die Störung des Sendesystems repräsentativ ist, und die ausgelöst wird, wenn der Gleichzeitigkeitstest der vorhergehenden Phase (P1) während einer bestimmten Dauer (V2) positiv bleibt,
**dadurch gekennzeichnet, dass** in der Testphase der Gleichzeitigkeit (P1) geprüft wird, ob das Niederdrücken des Gaspedals beständig ist und ob das Bremspedal (14) niedergedrückt ist.

7. Verfahren nach dem vorhergehenden Anspruch, **dadurch gekennzeichnet, dass** die Diagnosephase (P2) einen ersten Testvorgang aufweist, während dem geprüft wird, ob das Niederdrücken des Gaspedals beständig ist.

8. Verfahren nach einem der vorhergehenden Ansprüche, **dadurch gekennzeichnet, dass,** wenn das Niederdrücken des Pedals als nicht mehr beständig getestet wird, das Sendesystem (18) nicht als gestört angesehen und das Verfahren neu initialisiert wird.

9. Verfahren nach dem vorhergehenden Anspruch, **dadurch gekennzeichnet, dass** während der Diagnosephase (P2), wenn der erste Testvorgang während einer vorbestimmten Dauer (V3) positiv ist, ein zweiter Vorgang ausgelöst wird, während dem ein Signal (Sd2) gesendet wird, das für eine dauerhafte Störung des Sendesystems repräsentativ ist.
